# EUROPÄISCHE PATENTSCHRIFT

(11) **EP 1 448 437 B1**
(45) Veröffentlichungstag und Bekanntmachung des Hinweises auf die Patenterteilung: **25.05.2011**
(21) Anmeldenummer: 02787394.2
(22) Anmeldetag: 25.11.2002
(51) Int. Cl.: B63H 23/24, H02K 7/14, H02K 3/47, H02K 55/02, H02K 9/06, H02K 9/19, H02K 9/10, H02K 9/18

(54) **SCHIFFSANTRIEB**
SHIP PROPULSION SYSTEM
PROPULSION NAVALE

(30) Priorität: 29.11.2001 DE 10158757
(43) Veröffentlichungstag der Anmeldung: 25.08.2004
(73) Patentinhaber: SIEMENS AKTIENGESELLSCHAFT, 80333 München (DE)
(72) Erfinder: RIES, Günter, 91056 Erlangen (DE)
(86) Internationale Anmeldenummer: PCT/DE2002/004320
(87) Internationale Veröffentlichungsnummer: WO 2003/047962

(56) Entgegenhaltungen:
- WO-A-01/52393
- US-A- 5 078 628
- DIAMOND DRILL RADIA: "WPI WORLD PATENT INFORMATION DERWENT, DERWENT, GB" , WPI WORLD PATENT INFORMATION DERWENT, DERWENT, GB, VOL. 39, NR. 88 XP002042370 Seite 221, Spalte 2, Zeile 9 - Zeile 12 Seite 225, Spalte 2, Absatz 6 -Seite 226, Spalte 1, Absatz 1; Abbildungen 1,4,5

## Beschreibung

Die Erfindung bezieht sich auf einen Schiffsantrieb mit zumindest einem Schiffspropeller, zumindest einem Elektromotor, mittels dem der zumindest eine Schiffspropeller antreibbar ist, und einer umrichtergespeisten Stromversorgung, mittels der der zumindest eine Elektromotor mit elektrischer Energie versorgbar ist und die zumindest eine Antriebsmaschine und zumindest einen davon angetriebenen Generator aufweist, wobei der zumindest eine Elektromotor und der zumindest eine Generator als Drehstrom-Synchronmaschinen ausgebildet sind.

Es sind dieselelektrische Schiffsantriebe bekannt, deren Stromversorgung an geeigneter Stelle im Schiffsrumpf untergebrachte Synchrongeneratoren aufweist, durch die ihrerseits umrichtergespeiste Synchron- oder auch Asynchronmotoren gespeist werden. Die die Schiffspropeller antreibenden Elektromotoren können beispielsweise als Innenbordmotoren angeordnet sein und die Schiffspropeller über Wellenanlagen antreiben.

Darüber hinaus sind Podantriebe bekannt, die einen in einer drehbaren Motorgondel angeordneten Asynchronmotor oder permanent erregten Synchronmotor haben. Die Motorgondel ist außerhalb des Schiffsrumpfs angeordnet und kann mit einer oder zwei Schiffsschrauben ausgeführt sein. Die Verlustwärmeabführung aus dem Elektromotor erfolgt hier allein über die Außenfläche der Motorgondel an das Seewasser. Die Asynchronmotoren und Generatoren haben Luft-Wasser-Wärmetauscher.

Ausgehend von dem eingangs geschilderten Stand der Technik liegt der Erfindung die Aufgabe zugrunde, den gattungsgemäßen Schiffsantrieb derart weiterzubilden, dass er mit weniger Verlusten je kW installierter Leistung und entsprechend mit einem höheren Erregerfeld an der Wicklung ausgebildet werden kann.

Diese Aufgabe wird erfindungsgemäß dadurch gelöst, dass der zumindest eine als Drehstrom-Synchronmaschine ausgebildete Elektromotor und/oder der zumindest eine als Drehstrom-Synchronmaschine ausgebildete Generator der Stromversorgung als Ständerwicklung eine eisennutenfreie Luftspalt-Drehstromwicklung aufweist bzw. aufweisen, deren Bündelleiter aus isolierten dünnen Kupferdrähten ausgebildet sind, die in einem Ringspalt zwischen einem Rotor und einem geblechten magnetischen Eisenjoch angeordnet ist, die mittels einer Kunststoffstruktur verstärkt und/oder mit Harz vergossen oder imprägniert ist und die an eine ihr zugeordnete Kühlvorrichtung angeschlossen ist, mittels der in ihr entstehende Verlustwärme abführbar ist.

Aufgrund der Ausgestaltung der Luftspalt-Drehstromwicklung entfallen Eisennuten auf Erdpotential, wobei darüber hinaus die Potentialdifferenzen und Feldstärken zu Ständerleitern geringer sind; es sind höhere Isolierabstände bei der Luftspalt-Drehstromwicklung möglich, was insbesondere für Hochspannungsmotoren günstig ist.

Wenn der zumindest eine als Drehstrom-Synchronmaschine ausgebildete Elektromotor und/oder der zumindest eine als Drehstrom-Synchronmaschine ausgebildete Generator der Stromversorgung am Rotor eine rotierende Erregerwicklung aus Hochtemperatursupraleiter(HTSL)-Draht aufweist bzw. -aufweisen, die in einem Vakuum isolierten Kryostaten angeordnet und auf eine Temperatur von 15 bis 77 K tiefkühlbar ist, kann das Erregerfeld statt einem Tesla ca. zwei Tesla betragen; es sind große freie radiale Luft- bzw. Ringspalte zulässig, wobei hierdurch die Möglichkeit besteht, das Kühlmittel in direkten Kontakt mit der Luftspalt-Drehstromwicklung zu bringen.

Gemäß einer vorteilhaften Ausführung des erfindungsgemäßen Schiffsantriebs ist die eisennutenfreie Luftspalt-Drehstromwicklung des zumindest einen Elektromotors und/oder des zumindest einen Generators der Stromversorgung in ein Ringgefäß aus Isolierstoff eingebaut, das vom geblechten magnetischen Eisenjoch umgeben ist; dabei ist eine ausreichende Abfuhr der Verlustwärme der Luftspalt-Drehstromwicklung über das geblechte magnetische Eisenjoch allein nicht mehr möglich ist, so dass die Maßnahmen gemäß der Erfindung erforderlich sind.

Vorteilhaft ist das die eisennutenfreie Luftspalt-Drehstromwicklung aufnehmende Ringgefäß aus glasfaserverstärktem Kunststoff ausgebildet.

Die der eisennutenfreien Luftspalt-Drehstromwicklung zugeordnete Kühlvorrichtung läßt sich vorteilhaft mittels eines Kühlmittelkreislaufs ausgestalten, der Kühlmittel an einer Stirnseite des die Luftspalt-Drehstromwicklung aufnehmenden Ringgefäßes in dieses ein- und an dessen anderer Seite aus diesem abführt, wobei das Kühlmittel zwischen der einen Stirnseite und der anderen Stirnseite des Ringgefäßes zwischen der Luftspalt-Drehstromwicklung und dem Ringgefäß und gegebenenfalls durch weitere Längskanäle in der Luftspalt-Drehstromwicklung hindurchströmt.

Als Kühlmittel der der eisennutenfreien Luftspalt-Drehstromwicklung zugeordneten Kühlvorrichtung ist zweckmäßigerweise eine isolierende Kühlflüssigkeit vorgesehen, z.B. Öl, MIDEL od.dgl.

Zur Abführung von Verlustwärme aus dem Kühlmittelkreislauf der der eisennutenfreien Luftspalt-Drehstromwicklung zugeordneten Kühlvorrichtung ist zweckmäßigerweise in diesem Kühlmittelkreislauf ein Wärmetauscher angeordnet, der mittels des Kühlwassersystems des Schiffes rückkühlbar ist.

Alternativ kann der im Kühlmittelkreislauf der der eisennutenfreien Luftspalt-Drehstromwicklung zugeordneten Kühlvorrichtung vorgesehene Wärmetauscher mittels Seewasser rückgekühlt werden.

Der Wärmetauscher des Kühlmittelkreislaufs der der eisennutenfreien Luftspalt-Drehstromwicklung zugeordneten Kühlvorrichtung kann fest im Schiffsrumpf vorgesehen sein.

Gemäß einer weiteren vorteilhaften Ausführungsform des erfindungsgemäßen Schiffsantriebs ist dieser als Podantrieb ausgebildet, wobei dessen zumindest ein Elektromotor in einer Motorgondel des Podantriebs angeordnet ist.

Die den Kühlmittelkreislauf der der eisennutenfreien Luftspalt-Drehstromwicklung zugeordneten Kühlvorrichtung ausbildenden Kühlleitungen sind zweckmäßigerweise flexibel ausgebildet.

Um die Wärmeabfuhr aus dem geblechten magnetischen Eisenjoch des zumindest einen Elektromotors zu unterstützen, ist das Eisenjoch vorzugsweise in das Gehäuse der Motorgondel des Podantriebs eingeschrumpft.

Gemäß einer weiteren zweckmäßigen Ausführungsform des erfindungsgemäßen Schiffsantriebs ist der Wärmetauscher des Kühlmittelkreislaufs der der eisennutenfreien Luftspalt-Drehstromwicklung zugeordneten Kühlvorrichtung in einem drehbaren Azimuthmodul des Podantriebs angeordnet.

Wenn der Wärmetauscher des Kühlmittelkreislaufs der der eisennutenfreien Luftspalt-Drehstromwicklung zugeordneten Kühlvorrichtung in einem Strutmodul des Podantriebs angeordnet ist, wobei die Röhren des Wärmetauschers in thermischer Verbindung mit der Wandung des Strutmoduls stehen, kann in einfacher Weise Seewasser zur Abführung von Verlustwärme aus dem Kühlmittelkreislauf eingesetzt werden.

Zur Erleichterung etwaiger Wartungs- und Reparaturarbeiten der der eisennutenfreien Luftspalt-Drehstromwicklung zugeordneten Kühlvorrichtung ist es zweckmäßig, wenn eine in deren Kühlmittelkreislauf angeordnete Umwälzpumpe in oder am drehbaren Azimuthmodul des Podantriebs angeordnet ist. Gemäß einer weiteren vorteilhaften Ausführungsform des erfindungsgemäßen Schiffsantriebs weist die der eisennutenfreien Luftspalt-Drehstromwicklung des zumindest einen Elektromotors und/oder des zumindest einen Generators der Stromversorgung zugeordnete Kühlvorrichtung zumindest ein auf einer Rotorachse angeordnetes Lüfterrad auf, mittels dem eine Kühlgas-, z.B. eine Kühlluftströmung in den Ringzwischenraum zwischen der Luftspalt-Drehstromwicklung und dem Rotor und/oder den Ringzwischenraum zwischen der Luftspalt-Drehstromwicklung und dem geblechten magnetischen Eisenjoch des zumindest einen Elektromotors bzw. Generators richtbar ist. Mittels der Kühlluftströmung kann dann die im Ringspalt zwischen Rotor und Eisenjoch anfallende Verlustwärme aus dem Ringspalt abgeleitet werden.

Zweckmäßigerweise ist an beiden Stirnseiten des Rotors jeweils ein Lüfterrad vorgesehen, wobei dann jedes Lüfterrad zur Schaffung einer Kühlgasströmung geeignet ausgebildet wird, die etwa über die halbe axiale Abmessung des Elektromotors reicht.

Zur Erleichterung der Abfuhr der Verlustwärme aus dem Ringspalt zwischen Rotor einerseits und Eisenjoch andererseits ist es vorteilhaft, wenn die eisennutenfreie Luftspalt-Drehstromwicklung mit in ihrer Radialrichtung sich erstreckenden Kühlschlitzen ausgebildet ist, mittels denen in der Luftspalt-Drehstromwicklung entstehende Verlustwärme an diese durchströmendes Kühlgas ableitbar ist.

Die radialen Kühlschlitze der eisennutenfreien Luftspalt-Drehstromwicklung lassen sich zweckmäßigerweise durch Teflonfüllkörper bilden, die beim Zusammenbau der Luftspalt-Drehstromwicklung zwischen den Ständerstäben einsetz- und nach dem Vergießen bzw. Imprägnieren entfernbar sind. Zweckmäßigerweise ist die Kühlvorrichtung mit einer Leitblechanordnung versehen, durch die die von den beiden Lüfterrädern erzeugten Kühlgasströmungen in den Ringzwischenraum zwischen Rotor und eisennutenfreier Luftspalt-Drehstromwicklung in Richtung zum axialen Mittelbereich des zumindest einen Elektromotors und/oder Generators geleitet werden, wobei die Kühlgasströmungen durch die radialen Kühlschlitze der Luftspalt-Drehstromwicklung aus dem Ringzwischenraum zwischen Rotor und Luftspalt-Drehstromwicklung in den Ringzwischenraum zwischen Luftspalt-Drehstromwicklung und geblechtem magnetischen Eisenjoch und dann zurück zu den Stirnseiten des Rotors geleitet werden.

Kühlluft kann durch die Lüfterräder in wenig aufwendiger Weise angesaugt werden, wenn in einem Gehäuse des zumindest einem Elektromotors und/oder Generators je Lüfterrad eine Ansaugöffnung ausgebildet ist, durch die hindurch das bzw. die Lüfterräder Kühlgas ansaugen.

Die Abfuhr erwärmten Kühlgases ist in einfacher Weise möglich, wenn im Gehäuse des zumindest einen Elektromotors und/oder Generators eine oder mehrere Ableitöffnungen ausgebildet sind, durch die hindurch das Kühlgas, nachdem es den Ringspalt zwischen Rotor und Eisenjoch wieder verlassen hat, aus dem Gehäuse des zumindest einen Elektromotors und/oder Generators abgeleitet wird.

Die Ansaugöffnung bzw. die Ansaugöffnungen und die Ableitöffnung bzw. die Ableitöffnungen sind vorteilhaft an einer bzw. jeweils an einer der beiden Stirnseiten des Rotors im Gehäuse des zumindest einen Elektromotors und/oder Generators angeordnet.

Bei einer weiteren zweckmäßigen Ausführungsform des erfindungsgemäßen Schiffsantriebs ist die Kühlgasströmung in einem Kreislauf geführt und mittels Gas-Wasser-Wärmetauschern rückkühlbar.

Innerhalb des Gehäuses des zumindest einen Elektromotors und/oder Generators in einem Axialzwischenraum bzw. in beiden Axialzwischenräumen zwischen einer Stirnseite bzw. beiden Stirnseiten des zumindest einen Elektromotors und/oder Generators und einer Stirnwand bzw. beiden Stirnwänden des Gehäuses ist vorteilhaft jeweils zumindest ein Gas-Wasser-Wärmetauscher angeordnet, der an einem Kühlkreislauf des Schiffes angeschlossen ist und an dem die aus dem Ringspalt zwischen Rotor und Eisenjoch austretende erwärmte Kühlgasströmung vorbeigeführt wird, bevor sie von dem zumindest einem Lüfterrad zurück in den Ringspalt gedrückt wird. Irgendwelche zusätzlichen Kühlgaskreisläufe od.dgl. können bei dieser Ausführungsform entfallen.

Alternativ ist es möglich, die Gas-Wasser-Wärmetauscher außerhalb des Gehäuses des zumindest einen Elektromotors und/oder Generators anzuordnen.

Im folgenden wird die Erfindung anhand von Ausführungsformen unter Bezugnahme auf die Zeichnung näher erläutert.

Es zeigen:
- FIGUR 1: eine Prinzipdarstellung im Längsschnitt einer Ausführungsform des erfindungsgemäßen Schiffsantriebs;
- FIGUR 2: eine Prinzipdarstellung im Längsschnitt einer weiteren Ausführungsform des erfindungsgemäßen Schiffsantriebs;
- FIGUR 3b: eine Querschnittsdarstellung einer Luftspalt- Drehstromwicklung eines erfindungsgemäßen Schiffsantriebs;

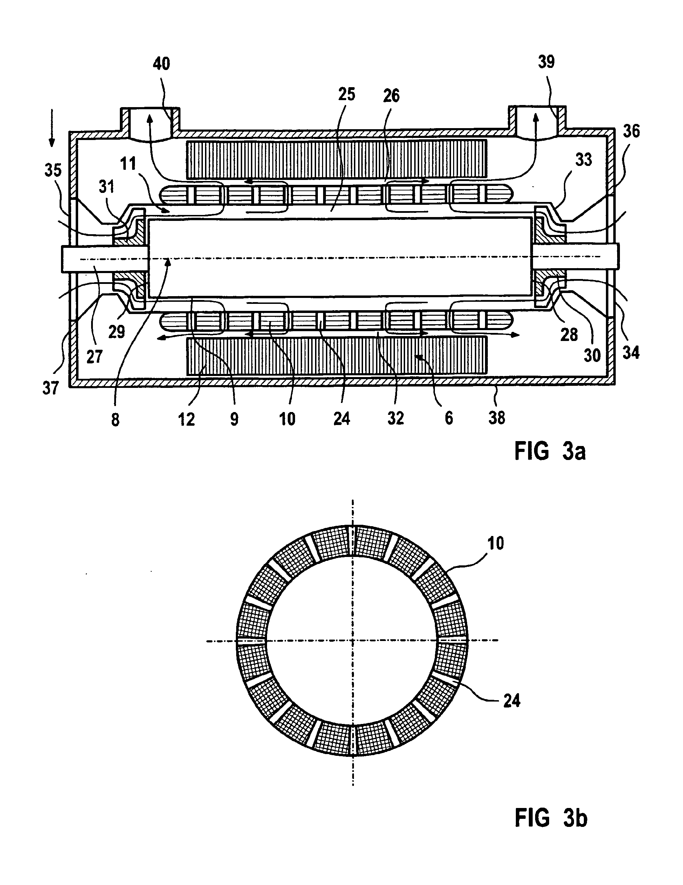

- FIGUR 3a: eine Längsschnittdarstellung eines Elektro- motors bzw. Generators eines erfindungsgemäßen Schiffsantriebs; und

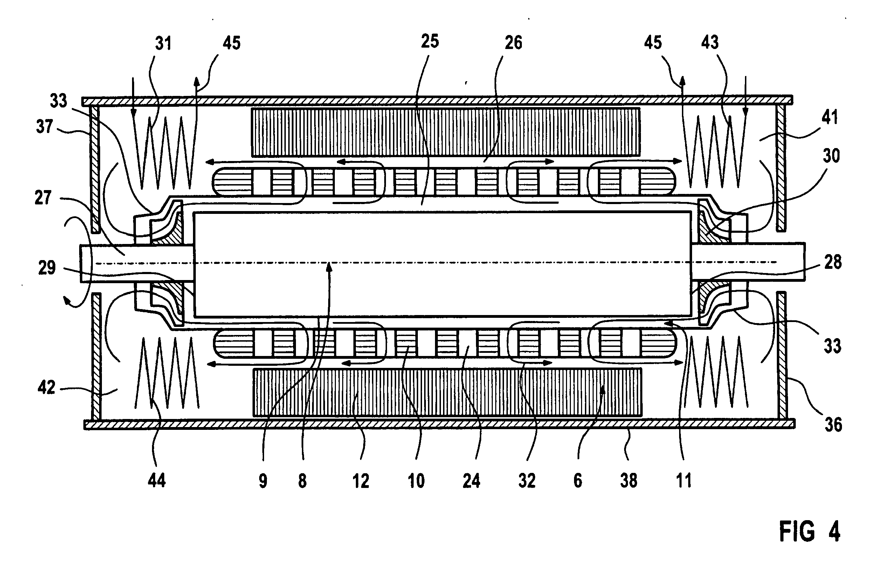

- FIGUR 4: eine Längsschnittdarstellung einer weiteren Aus- führungsform eines Elektromotors bzw. Generators des erfindungsgemäßen Schiffsantriebs.

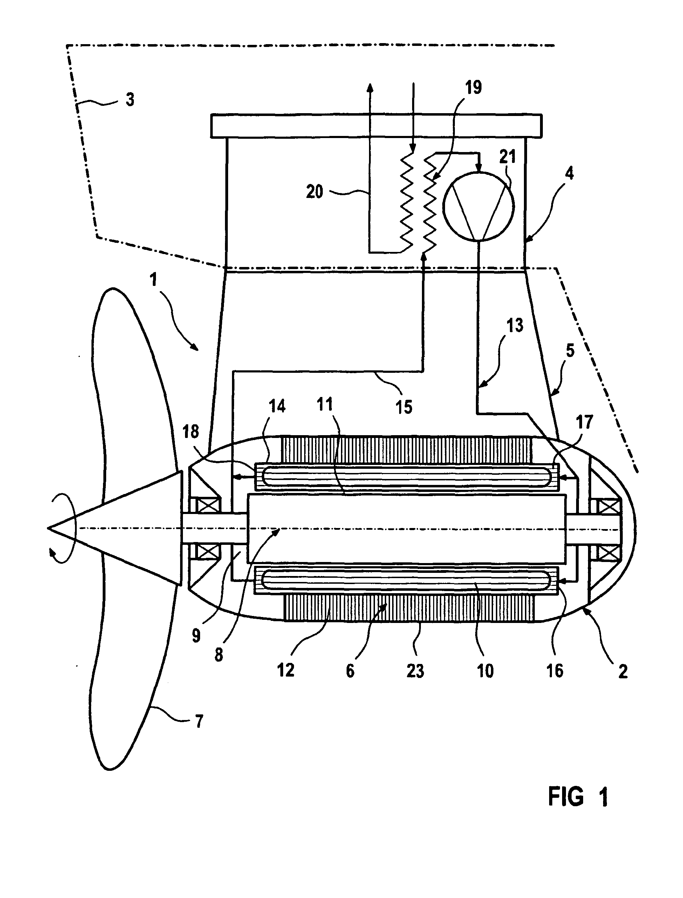

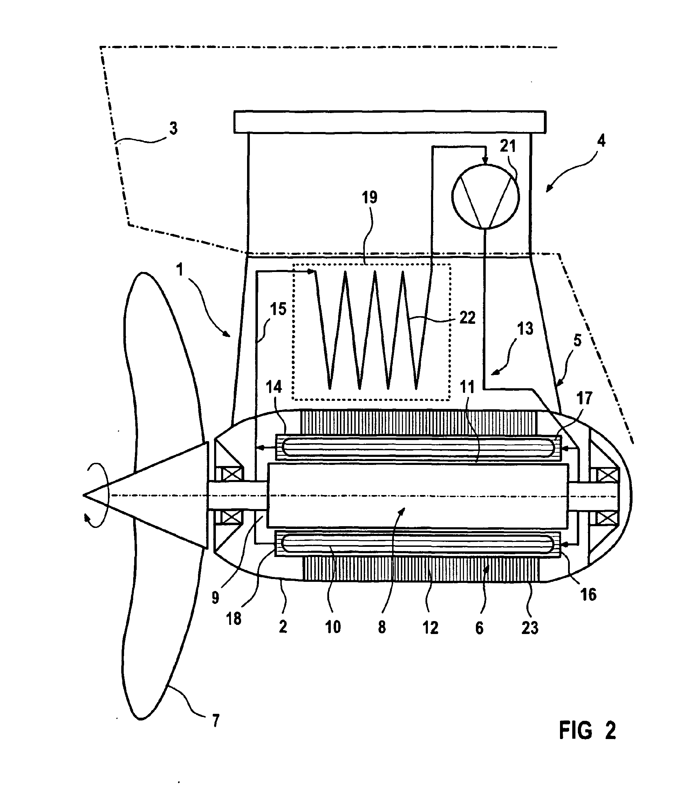

Eine in FIGUR 1 im Querschnitt dargestellte erste Ausführungsform eines als Podantrieb 1 ausgebildeten erfindungsgemäßen Schiffsantriebs hat eine Motorgondel 2, die unterhalb eines Schiffsrumpfs 3, der in den FIGUREN 1 und 2 gestrichelt und lediglich teilweise dargestellt ist, angeordnet ist.

Innerhalb des Schiffsrumpfs 3 weist der Podantrieb 1 ein drehbares Azimuthmodul 4 auf, welches durch den Schiffsrumpf 3 hindurch mittels eines Strutmoduls 5 mit einer Motorgondel 2 fest verbunden ist.

Der Podantrieb 1 ist in Bezug auf den Schiffsrumpf 3 um eine senkrechte Achse drehbar.

Der in FIGUR 1 gezeigte Podantrieb 1 hat einen innerhalb der Motorgondel 2 angeordneten Elektromotor 6. Mittels dieses Elektromotors 6 wird ein am hinteren Ende der Motorgondel 2 rotierbar angeordneter Schiffspropeller 7 angetrieben.

Der Elektromotor 6 ist als Drehstrom-Synchronmaschine ausgebildet und hat einen Rotor 8, der mit einer in den FIGUREN nicht näher gezeigten rotierenden Erregerwicklung aus HTSL (Hochtemperatursupraleiter)-Draht ausgerüstet ist. Dieser Rotor 8 ist innerhalb eines Kryostaten 9 aufgenommen, der vakuumisoliert ausgebildet ist und mittels dem die rotierende Erregerwicklung aus HTSL-Draht des Rotors auf eine Temperatur von 15 bis 77 K tiefkühlbar ist.

Der als Drehstrom-Synchronmaschine ausgebildete Elektromotor 6 hat darüber hinaus eine Luftspalt-Drehstrom- bzw. Ständerwicklung 10, die ohne Eisennuten bzw. Eisenzähne ausgebildet ist. Die eisennutenfreie Luftspalt-Drehstromwicklung 10 hat Bündelleiter aus isolierten dünnen Kupferdrähten und ist in einem Ringspalt 11 zwischen dem Rotor 8 und einem geblechten magnetischen Eisenjoch 12 angeordnet.

Um trotz des Wegfalls der Eisenzähne bzw. -nuten, des hohen Anteils an Isolierstoffen und der großen Abstände zum geblechten magnetischen Eisenjoch 12 eine ausreichende Abfuhr der in der Luftspalt-Drehstromwicklung 10 anfallenden Verlustwärme zu gewährleisten, ist die Luftspalt-Drehstromwicklung 10 mit einer Kühlvorrichtung 13 versehen.

Aus mechanischen Gründen ist die eisennutenfreie Luftspalt-Drehstromwicklung 10 mit einer sie verstärkenden Kunststoffstruktur versehen und/oder mit einem geeigneten Harz od.dgl. vergossen oder imprägniert.

Bei der in den FIGUREN 1 und 2 gezeigten, als Podantrieb 1 ausgestalteten Ausführungsform des Schiffsantriebs ist die eisennutenfreie Luftspalt-Drehstromwicklung 10 in einem Ringgefäß 14 aufgenommen. Das Ringgefäß 14 besteht aus einem Isolierstoff, z.B. aus einem glasfaserverstärkten Kunststoff (GFK).

Dieses bei der Ausführungsform gemäß den FIGUREN 1 und 2 die verstärkende Kunststoffstruktur bildende Ringgefäß 14 ist von dem ebenfalls ringförmig ausgestalteten geblechten magnetischen Eisenjoch 12 umgeben.

Die dem Ringgefäß 14 bzw. der darin aufgenommenen eisennutfreien Luftspalt-Drehstromwicklung 10 zugeordnete Kühlvorrichtung 13 hat einen Kühlmittelkreislauf 15, der an einer Stirnseite 16 gekühltes Kühlmittel 17 in das Ringgefäß 14 einführt und das dann durch die in der Luftspalt-Drehstromwicklung 10 anfallende Verlustwärme erwärmte Kühlmittel 17 an der anderen Stirnseite 18 des Ringgefäßes 14 wieder aufnimmt und ableitet.

Durch die ringförmigen Zwischenräume zwischen dem Ringgefäß 14 einerseits und der Luftspalt-Drehstromwicklung 10 andererseits und gegebenenfalls durch weitere Längskanäle in der Luftspalt-Drehstromwicklung 10 wird das Kühlmittel 17 an der Luftspalt-Drehstromwicklung 10 in deren Axialrichtung vorbei geleitet.

Als Kühlmittel 17 wird eine isolierende Kühlflüssigkeit, z.B. Öl, MIDEL od.dgl. eingesetzt.

Bei der in FIGUR 1 gezeigten Ausführungsform des Podantriebs 1 weist der Kühlmittelkreislauf 15 der Kühlvorrichtung 13 einen Wärmetauscher 19 auf, der in bzw. am drehbaren Azimuthmodul 4 des Podantriebs 1 vorgesehen ist. Der Wärmetauscher 19 wird durch ein schiffsseitiges Kühlwassersystem 20 rückgekühlt.

Der Wärmetauscher 19 kann statt in bzw. am drehbaren Azimuthmodul 4 des Podantriebs 1 auch an einer anderen geeigneten Stelle innerhalb des Schiffsrumpfs 3 angeordnet werden.

Der Kühlmittelkreislauf 15 hat darüber hinaus eine Umwälzpumpe 21, die bei den in den FIGUREN 1 und 2 gezeigten Ausführungsbeispielen im drehbaren Azimuthmodul 4 des Podantriebs 1 angeordnet ist. Entsprechend kann die Umwälzpumpe 1 mit einem vergleichsweise geringen Aufwand gewartet und gegebenenfalls repariert bzw. ausgewechselt werden, da sie infolge ihrer Anordnung im drehbaren Azimuthmodul 4 des Podantriebs 1 leicht zugänglich ist.

Kühlleitungen des Kühlmittelkreislaufs 15 sind flexibel ausgestaltet.

Die in FIGUR 2 gezeigte Ausführungsform des Podantriebs 1 unterscheidet sich von der in FIGUR 1 gezeigten dadurch, dass der Wärmetauscher 19 des Kühlmittelkreislaufs 15 der dem Ringgefäß 14 bzw. der darin aufgenommenen Luftspalt-Drehstromwicklung 10 zugeordneten Kühlvorrichtung 13 im Strutmodul 5 des Podantriebs 1 angeordnet ist. Die Rohrschlangen 22 der in FIGUR 2 gezeigten Ausführungsform des Wärmetauschers 19 sind in thermischer Verbindung mit der Wandung des Strutmoduls 5 angeordnet, so dass sie die im sie durchströmenden Kühlmittel 17 enthaltende Verlustwärme der Luftspalt-Drehstromwicklung 10 an das das Strutmodul 5 umgebende Seewasser abgeben.

Bei den in den FIGUREN 1 und 2 gezeigten Ausführungsformen des Podantriebs 1 ist das geblechte magnetische Eisenjoch 12 in das Gehäuse 13 der Motorgondel 2 eingeschrumpft, so dass im Eisenjoch 12 anfallende Verlustwärme durch das Gehäuse 23 unmittelbar an das die Motorgondel 2 umgebende Seewasser abgegeben werden kann.

Bei den in den FIGUREN 3a bis 4 gezeigten Ausführungsformen des erfindungsgemäßen Schiffsantriebs ist der Elektromotor 6 in geeigneter Weise am bzw. im Schiff angeordnet.

Im Ringspalt 11 zwischen dem Rotor 8, dessen rotierende Erregerwicklung im Kryostaten 9 aufgenommen ist, und dem geblechten magnetischen Eisenjoch 12 ist die eisennutenfreie Luftspalt-Drehstromwicklung 10 aufgenommen.

Diese Luftspalt-Drehstromwicklung hat in ihrer Radialrichtung verlaufende Kühlschlitze 24. Diese radialen Kühlschlitze 24 der Luftspalt-Drehstromwicklung 10 entstehen dadurch, dass beim Zusammenbau der Luftspalt-Drehstromwicklung 10 zwischen deren Ständerstäben geeignet geformte Teflonfüllkörper eingesetzt werden, die nach dem Vergießen bzw. Imprägnieren der Luftspalt-Drehstromwicklung 10 entfernt werden.

Mittels dieser die Luftspalt-Drehstromwicklung 10 durchsetzenden radialen Kühlschlitze 24 ist ein innerer Ringzwischenraum 25, der zwischen der Außenmantelfläche des Rotors 8 und der Innenmantelfläche der Luftspalt-Drehstromwicklung 10 ausgebildet ist, an einen äußeren Ringzwischenraum 26 angeschlossen, der zwischen der Außenmantelfläche der Luftspalt-Drehstromwicklung 10 und der Innenmantelfläche des ringförmigen geblechten magnetischen Eisenjochs 12 ausgebildet ist.

Die Ausgestaltung, Anordnung und der Verlauf der radialen Kühlschlitze 24 der Luftspalt-Drehstromwicklung 10 gehen am besten aus einer Zusammenschau der FIGUREN 3a bzw. 4 mit FIGUR 3b hervor.

Der in den FIGUREN 3a bis 4 für den Elektromotor 6 gezeigte Aufbau ist ähnlich auch für einen Generator geeignet, der an beliebiger Stelle im Schiffsrumpf 3 angeordnet werden kann.

Der Rotor 8 des Elektromotors 6 sitzt auf einer Rotorachse 27, auf der an beiden Stirnseiten 28, 29 des Rotors 8 jeweils ein Lüfterrad 30 bzw. 31 sitzt.

Mittels des Lüfterrads 30 bzw. 31 wird jeweils eine Kühlluftströmung 32 von der Stirnseite 28 bzw. von der Stirnseite 29 des Rotors 8 her in den inneren Ringzwischenraum 25 zwischen der Mantelfläche des Rotors 8 und der Innenmantelfläche der Luftspalt-Drehstromwicklung 10 eingeleitet. Die kapazitive Auslegung der Lüfterräder 30, 31 ist so gewählt, dass sich die Kühlluftströmungen 32 etwa in einem axialen Mittelbereich des Rotors 8 treffen.

Durch die Kühlschlitze 24 der Luftspalt-Drehstromwicklung 10 gelangt die Kühlluftströmung 32 in den äußeren Ringzwischenraum 26 zwischen der Außenmantelfläche der Luftspalt-Drehstromwicklung 10 und der Innenmantelfläche des geblechten magnetischen Eisenjochs 12. Aus diesem äußeren Ringzwischenraum 26 tritt die Kühlluftströmung 32 an den beiden Stirnseiten 28, 29 bzw. nahe dieser beiden Stirnseiten 28, 29 des Rotors 8 wieder aus.

Beim Durchtritt der Kühlluftströmung 32 durch den inneren Ringzwischenraum 25, die radialen Kühlschlitze 24 der Luftspalt-Drehstromwicklung 10 und den äußeren Ringzwischenraum 26 wird Verlustwärme aus der Luftspalt-Drehstromwicklung 10 und aus dem geblechten magnetischen Eisenjoch 12 auf die Kühlluft übertragen und aus dem Ringspalt 11 abgeführt.

Bei der in FIGUR 3a gezeigten Ausführungsform des Elektromotors 6 ist im Bereich der beiden Lüfterräder 30, 31 jeweils eine Leitblechanordnung 33 vorgesehen, mittels der die in den inneren Ringzwischenraum 25 einzuleitende Kühlluft von aus dem äußeren Ringzwischenraum 26 austretender, erwärmter Kühlluft getrennt wird. Bei dem in FIGUR 3a gezeigten Ausführungsbeispiel des Elektromotors 6 reichen die beiden Leitblechanordnungen 33 jeweils bis zu einer Ansaugöffnung 34 bzw. 35, die in den Stirnwänden 36 bzw. 37 eines den Elektromotor 6 im Falle der Ausführungsformen gemäß den FIGUREN 3a und 4 aufnehmenden Gehäuses 38 ausgebildet sind.

Die aus dem äußeren Ringzwischenraum 26 austretende erwärmte Kühlluftströmung 32 wird durch Ableitöffnungen 39, 40, die nahe den Stirnwänden 36, 37 im Gehäuse 38 ausgebildet sind, aus dem Gehäuse 38 abgeleitet.

Zwischen den Ansaugöffnungen 34, 35 einerseits und den Ableitöffnungen 39, 40 andererseits kann eine Leitungsverbindung vorgesehen sein, in der mittels eines dort vorgesehenen Wärmetauschers die Kühlluft soweit abgekühlt wird, dass sie mittels der Lüfterräder 30, 31 wieder in den inneren Ringzwischenraum 25 eingeleitet werden kann.

Im Unterschied zu der in FIGUR 3a gezeigten Ausführungsform des Elektromotors 6 ist im Falle der in FIGUR 4 gezeigten Ausführungsform desselben in den beiden Axialzwischenräumen 41, 42 zwischen den Stirnwänden 36, 37 des Gehäuses 38 und den Stirnseiten 28, 29 des Rotors 8 bzw. des Elektromotors 7 jeweils ein Gas-Wasser-Wärmetauscher 43 bzw. 44 angeordnet. Die Kühlluftströmung 32 wird innerhalb des Gehäuses 38 durch die beiden Axialzwischenräume 41, 42 quasi in zwei Kreisläufen geführt, wobei die durch die Verlustwärme aus der Luftspalt-Drehstromwicklung 10 bzw. dem geblechten magnetischen Eisenjoch 12 erwärmte und aus dem äußeren Ringzwischenraum 26 austretende Kühlluftströmung durch den Gas-Wasser-Wärmetauscher 43 bzw. 42 gekühlt wird, bevor die dann gekühlte Kühlluftströmung 32 durch die beiden Lüfterräder 30, 31 wieder in den inneren Ringzwischenraum 25 eingedrückt wird.

Die Leitblechanordnung 33 ist bei der Ausführungsform gemäß FIGUR 4 so gestaltet, dass nur solche Kühlluft durch die Lüfterräder 30, 31 angesaugt wird, die bereits am Gas-Wasser-Wärmetauscher 43 bzw. 44 vorbeigeströmt ist.

Die beiden Gas-Wasser-Wärmetauscher 43, 44 sind an einen Kühlkreislauf 45 des Schiffes angeschlossen.

## Patentansprüche

1. Schiffsantrieb, mit zumindest einem Schiffspropeller (7), zumindest einem Elektromotor (6), mittels dem der zumindest eine Schiffspropeller (7) antreibbar ist, und einer umrichtergespeisten Stromversorgung, mittels der der zumindest eine Elektromotor (6) mit elektrischer Energie versorgbar ist und die zumindest eine Antriebsmaschine und zumindest einen davon angetriebenen Generator aufweist, wobei der zumindest eine Elektromotor (6) und der zumindest eine Generator als Drehstrom-Synchronmaschinen ausgebildet sind, wobei der zumindest eine als Drehstrom-Synchronmaschine ausgebildete Elektromotor (6) und/oder der zumindest eine als Drehstrom-Synchronmaschine ausgebildete Generator der Stromversorgung einen Rotor (8) und eine Ständerwicklung aufweist bzw. aufweisen, die in einer Radialrichtung des Elektromotors (6) bzw. des Generators aufeinander folgend angeordnet sind, und wobei die Ständerwicklung eine Luftspalt-Drehstromwicklung (10) aufweist, deren Bündelleiter aus isolierten dünnen Kupferdrähten ausgebildet sind, die in einem Ringspalt (11) zwischen dem Rotor (8) und einem Eisenjoch (12) angeordnet ist, die mittels einer Kunststoffstruktur verstärkt und/oder mit Harz vergossen oder imprägniert ist und die an eine ihr zugeordnete Kühlvorrichtung (13) angeschlossen ist, mittels der in ihr entstehende Verlustwärme abführbar ist, **dadurch gekennzeichnet, dass** die Luftspalt-Drehstromwicklung (10) eisennutenfrei und das Eisenjoch (12) als geblechtes magnetisches Eisenjoch (12) ausgebildet ist und dass die eisennutenfreie Luftspalt-Drehstromwicklung (10) des zumindest einen Elektromotors (6) und/oder des zumindest einen Generators der Stromversorgung in ein Ringgefäß (14) aus Isolierstoff eingebaut ist, das vom geblechten magnetischen Joch (12) umgeben ist, und dass die der eisennutenfreien Luftspalt-Drehstromwicklung (10) zugeordnete Kühlvorrichtung (13) einen Kühlmittelkreislauf (15) aufweist, der Kühlmittel (17) an einer Stirnseite (16) des die Luftspalt-Drehstromwicklung (10) aufnehmenden Ringgefäßes (14) in dieses ein- und an dessen anderer Stirnseite (18) aus diesem abführt, wobei das Kühlmittel (17) zwischen der einen Stirnseite (16) und der anderen Stirnseite (18) des Ringgefäßes (14) zwischen der Luftspalt-Drehstromwicklung (10) und dem Ringgefäß (14) und ggf. durch weitere Längskanäle in der Luftspalt-Drehstromwicklung (10) hindurchströmt.

2. Schiffsantrieb nach Anspruch 1, bei dem der zumindest eine als Drehstrom-Synchronmaschine ausgebildete Elektromotor (6) und/oder der zumindest eine als Drehstrom-Synchronmaschine ausgebildete Generator der Stromversorgung am Rotor eine rotierende Erregerwicklung aus Hochtemperatursupraleiter(HTSL)-Draht aufweist bzw. aufweisen, die in einem vakuumisolierten Kryostaten (9) angeordnet und auf eine Temperatur von 15 bis 77 K tiefkühlbar ist.

3. Schiffsantrieb nach Anspruch 1, bei dem das die eisennutenfreie Luftspalt-Drehstromwicklung (10) aufweisende Ringgefäß (14) aus glasfaserverstärktem Kunststoff ausgebildet ist.

4. Schiffsantrieb nach einem der Ansprüche 1 bis 3, bei dem als Kühlmittel (17) der der eisennutenfreien Luftspalt-Drehstromwicklung (10) zugeordneten Kühlvorrichtung (13) eine isolierende Kühlflüssigkeit, z.B. Öl, MIDEL od.dgl., vorgesehen ist.

5. Schiffsantrieb nach einem der Ansprüche 1 bis 4, bei dem ein im Kühlmittelkreislauf (15) der der eisennutenfreien Luftspalt-Drehstromwicklung (10) zugeordneten Kühlvorrichtung (13) angeordneter Wärmetauscher (19) mittels des Kühlwassersystems (20) des Schiffes rückkühlbar ist.

6. Schiffsantrieb nach einem der Ansprüche 1 bis 4, bei dem ein im Kühlmittelkreislauf (15) der der eisennutenfreien Luftspalt-Drehstromwicklung (10) zugeordneten Kühlvorrichtung (13) angeordneter Wärmetauscher (19) mittels Seewasser rückkühlbar ist.

7. Schiffsantrieb nach Anspruch 5 oder 6, bei dem der Wärmetauscher (19) des Kühlmittelkreislaufs (15) der der eisennutenfreien Luftspalt-Drehstromwicklung (10) zugeordneten Kühlvorrichtung (13) fest im Schiffsrumpf (3) angeordnet ist.

8. Schiffsantrieb nach einem der Ansprüche 1 bis 7, der als Podantrieb (1) ausgebildet und dessen zumindest ein Elektromotor (6) in einer Motorgondel (2) des Podantriebs (1) angeordnet ist.

9. Schiffsantrieb nach einem der Ansprüche 1 bis 8, bei dem den Kühlmittelkreislauf (15) der der eisennutenfreien Luftspalt-Drehstromwicklung (10) zugeordneten Kühlvorrichtung (13) ausbildende Kühlleitungen flexibel ausgebildet sind.

10. Schiffsantrieb nach Anspruch 8 oder 9, bei dem das geblechte magnetische Eisenjoch (12) des zumindest einen Elektromotors (6) in das Gehäuse (23) der Motorgondel (2) des Podantriebs (1) eingeschrumpft ist.

11. Schiffsantrieb nach einem der Ansprüche 8 bis 10, bei dem der Wärmetauscher (19) des Kühlmittelkreislaufs (15) der der eisennutenfreien Luftspalt-Drehstromwicklung (10) zugeordneten Kühlvorrichtung (13) in einem drehbaren Azimuthmodul (4) des Podantriebs (1) angeordnet ist.

12. Schiffsantrieb nach einem der Ansprüche 8 bis 10, bei dem der Wärmetauscher (19) des Kühlmittelkreislaufs (15) der der eisennutenfreien Luftspalt-Drehstromwicklung (10) zugeordneten Kühlvorrichtung (13) in einem Strutmodul (5) des Podantriebs (1) angeordnet ist, wobei die Röhren des Wärmetauschers (19) in thermischer Verbindung mit der Wandung des Strutmoduls (5) stehen.

13. Schiffsantrieb nach einem der Ansprüche 8 bis 12, bei dem eine im Kühlmittelkreislauf (15) der der eisennutenfreien Luftspalt-Drehstromwicklung (10) zugeordneten Kühlvorrichtung (13) angeordnete Umwälzpumpe (21) in oder am drehbaren Azimuthmodul (4) des Podantriebs (1) angeordnet ist.

14. Schiffsantrieb nach Anspruch 1 oder 2, bei dem die der eisennutenfreien Luftspalt-Drehstromwicklung (10) des zumindest einen Elektromotors (6) und/oder des zumindest einen Generators der Stromversorgung zugeordnete Kühlvorrichtung zumindest ein auf einer Rotorachse (27) angeordnetes Lüfterrad (30, 31) aufweist, mittels dem eine Kühlgas-, z.B. eine Kühlluftströmung (32), in den Ringzwischenraum (25) zwischen der Luftspalt-Drehstromwicklung (10) und dem Rotor (8) und/oder den Ringzwischenraum (26) zwischen der Luftspalt-Drehstromwicklung (10) und dem geblechten magnetischen Eisenjoch (12) des zumindest einen Elektromotors (6) bzw. Generators richtbar ist.

15. Schiffsantrieb nach Anspruch 14, bei dem an beiden Stirnseiten (28, 29) des Rotors (8) jeweils ein Lüfterrad (30, 31) vorgesehen ist.

16. Schiffsantrieb nach Anspruch 14 oder 15, bei dem die eisennutenfreie Luftspalt-Drehstromwicklung (10) mit in ihrer Radialrichtung sich erstreckenden Kühlschlitzen (24) ausgebildet ist, mittels denen in der Luftspalt-Drehstromwicklung (10) entstehende Verlustwärme an diese durchströmendes Kühl-Kühlgas (32) ableitbar ist.

17. Schiffsantrieb nach Anspruch 16, bei dem die radialen Kühlschlitze (24) der eisennutenfreien Luftspalt-Drehstromwicklung (10) durch Teflonfüllkörper gebildet sind, die beim Zusammenbau der Luftspalt-Drehstromwicklung (10) zwischen deren Ständerstäben einsetz- und nach dem Vergießen bzw. Imprägnieren entfernbar sind.

18. Schiffsantrieb nach Anspruch 16 oder 17, mit einer Leitblechanordnung (33), durch die die von den beiden Lüfterrädern (30, 31) erzeugten Kühlgasströmungen (32) in den Ringzwischenraum (25) zwischen Rotor (8) und eisennutenfreier Luftspalt-Drehstromwicklung (10) in Richtung zum axialen Mittelbereich des zumindest einen Elektromotors (6) und/oder Generators geleitet werden, wobei die Kühlgasströmungen (32) durch die radialen Kühlschlitze (24) der Luftspalt-Drehstromwicklung (10) aus dem Ringzwischenraum (25) zwischen Rotor (8) und Luftspalt-Drehstromwicklung (10) in den Ringzwischenraum (26) zwischen Luftspalt-Drehstromwicklung (10) und geblechtem magnetischen Eisenjoch (12) und dann zurück zu den Stirnseiten (28, 29) des Rotors (8) geleitet werden.

19. Schiffsantrieb nach einem der Ansprüche 14 bis 18, bei dem in einem Gehäuse (38) des zumindest einen Elektromotors (6) und/oder Generators je Lüfterrad (30, 31) eine Ansaugöffnung (34, 35) ausgebildet ist, durch die hindurch das bzw. die Lüfterräder (30, 31) Kühlgas ansaugen.

20. Schiffsantrieb nach einem der Ansprüche 14 bis 19, bei dem im Gehäuse (38) des zumindest einen Elektromotors (6) und/oder Generators eine oder mehrere Ableitöffnungen (39, 40) ausgebildet sind, durch die hindurch das Kühlgas (32), nachdem es den Ringspalt (11) zwischen Rotor (8) und Eisenjoch (12) wieder verlassen hat, aus dem Gehäuse (38) des zumindest einen Elektromotors (6) und/oder Generators abgeleitet wird.

21. Schiffsantrieb nach Anspruch 20, bei dem die Ansaugöffnung bzw. die Ansaugöffnungen (34, 35) und die Ableitöffnung bzw. die Ableitöffnungen (39, 40) an einer bzw. jeweils an einer der beiden Stirnseiten (28, 29) des Rotors (8) im Gehäuse (38) des zumindest einen Elektromotors (6) und/oder Generators angeordnet sind.

22. Schiffsantrieb nach einem der Ansprüche 14 bis 21, bei dem die Kühlgasströmung (32) in einem Kreislauf geführt und mittels Gas-Wasser-Wärmetauschern (43, 44) rückkühlbar ist.

23. Schiffsantrieb nach einem der Ansprüche 14 bis 18, bei dem innerhalb des Gehäuses (38) des zumindest einen Elektromotors (6) und/oder Generators in einem Axialzwischenraum bzw. in beiden Axialzwischenräumen (41, 42) zwischen einer Stirnseite bzw. beiden Stirnseiten (28, 29) des zumindest einen Elektromotors (6) und/oder Generators und einer Stirnwand bzw. beiden Stirnwänden (36, 37) des Gehäuses (38) jeweils zumindest ein Gas-Wasser-Wärmetauscher (43, 44) angeordnet ist, der an einen Kühlkreislauf (45) des Schiffes angeschlossen ist und an dem die aus dem Ringspalt (11) zwischen Rotor (8) und Eisenjoch (12) austretende erwärmte Kühlgasströmung (32) vorbeigeführt wird, bevor sie von dem zumindest einen Lüfterrad (30, 31) zurück in den Ringspalt (11) gedrückt wird.

24. Schiffsantrieb nach einem der Ansprüche 14 bis 22, bei dem der bzw. die Gas-Wasser-Wärmetauscher außerhalb des Gehäuses des zumindest einen Elektromotors (6) und/oder Generators angeordnet ist bzw. sind.

## Claims

1. Marine propulsion system, having at least one vessel propeller (7), at least one electric motor (6) by means of which the at least one vessel propeller (7) can be driven, and having a converter-fed power supply, by means of which the at least one electric motor (6) can be supplied with electric power, and which has at least one drive machine and at least one generator which can be driven by it, with the at least one electric motor (6) and the at least one generator being in the form of three-phase synchronous machines, wherein the at least one electric motor (6) (which is in the form of a three-phase synchronous machine) and/or the at least one generator (which is in the form of a three-phase synchronous machine) for the power supply has or have a rotor (8) and a stator winding, which are arranged following one another in the radial direction of the electric motor (6) and of the generator, and wherein the stator winding has an air gap three-phase winding (10), whose bundled conductors are formed from insulated thin copper wires which are arranged in an annular gap (11) between the rotor (8) and an iron yoke (12), which is reinforced by means of a plastic structure (14) and/or is encapsulated or impregnated with resin, and which is connected to a cooling apparatus (13) associated with it, by means of which heat losses that are produced in it can be dissipated, **characterized in that** the air gap three-phase winding (10) has no slots in the iron and the iron yoke (12) is in the form of a laminated magnetic iron yoke (12), and **in that** the air gap three-phase winding (10) (which has no slots in the iron) of the at least one electric motor (6) and/or of the at least one generator for the power supply is installed in an annular container (14) composed of insulating material, which is surrounded by the laminated magnetic iron yoke (12), and **in that** the cooling apparatus (13) which is associated with the air gap three-phase winding (10) without any slots in the iron has a coolant circuit (15) which introduces the coolant (17) into the annular container (14) on one end face (16) of said annular container (14), which holds the air gap three-phase winding (10), and carries the coolant away from the annular container (14) on its other end face (18) with the coolant (17) flowing between the first end face (16) and the second end face (18) of the annular container (14) between the air gap three-phase winding (10) and the annular container (14) and, possibly, through further longitudinal channels in the air gap three-phase winding (10).

2. Marine propulsion system according to Claim 1, in which the at least one electric motor (6) (which is in the form of a three-phase synchronous machine) and/or the at least one generator (which is in the form of a three-phase synchronous machine) for the power supply has or have a rotating field winding on the rotor composed of high-temperature superconductor (HTSL) wire, which is arranged in a vacuum-insulated cryostat (9) and can be cryogenically cooled to a temperature between 15 and 77 K.

3. Marine propulsion system according to Claim 1, in which the annular container (14) which has the air gap three-phase winding (10) without any slots in the iron is formed from glass-fiber-reinforced plastic.

4. Marine propulsion system according to one of Claims 1 to 3, in which an insulating cooling liquid, for example oil, MIDEL or the like, is provided as the coolant (17) for the cooling apparatus (13) which is associated with the air gap three-phase winding (10) without any slots in the iron.

5. Marine propulsion system according to one of Claims 1 to 4, in which a heat exchanger (19) which is arranged in the coolant circuit (15) of the cooling apparatus (13) which is associated with the air gap three-phase winding (10) without any slots in the iron can be cooled down again by means of the cooling water system (20) of the vessel.

6. Marine propulsion system according to one of Claims 1 to 4, in which a heat exchanger (19) which is arranged in the coolant circuit (15) of the cooling apparatus (13) which is associated with the air gap three-phase winding (10) without any slots in the iron can be cooled down again by means of seawater.

7. Marine propulsion system according to Claim 5 or 6, in which the heat exchanger (19) for the coolant circuit (15) for the cooling apparatus (13) which is associated with the air gap three-phase winding (10) without any slots in the iron is arranged fixed in the vessel's hull (3).

8. Marine propulsion system according to one of Claims 1 to 7, which is in the form of a pod propulsion system (1) and whose at least one electric motor (6) is arranged in a motor gondola (2) of the pod propulsion system (1).

9. Marine propulsion system according to one of Claims 1 to 8, in which cooling lines which form the coolant circuit (15) for the cooling apparatus (13) which is associated with the air gap three-phase winding (10) without any slots in the iron are designed to be flexible.

10. Marine propulsion system according to Claim 8 or 9, in which the laminated magnetic iron yoke (12) of the at least one electric motor (6) is shrunk into the housing (23) of the motor gondola (2) of the pod propulsion system (1).

11. Marine propulsion system according to one of Claims 8 to 10, in which the heat exchanger (19) for the coolant circuit (15) of the cooling apparatus (13) which is associated with the air gap three-phase winding (10) without any slots in the iron is arranged in an azimuth module (4) (which can rotate) of the pod propulsion system (1).

12. Marine propulsion system according to one of Claims 8 to 10, in which the heat exchanger (19) for the coolant circuit (15) of the cooling apparatus (13) which is associated with the air gap three-phase winding (10) without any slots in the iron is arranged in a strut module (5) of the pod propulsion system (1), with the tubes of the heat exchanger (19) being thermally connected to the wall of the strut module (5).

13. Marine propulsion system according to one of Claims 8 to 12, in which a circulation pump (21) which is arranged in the coolant circuit (15) of the cooling apparatus (13) which is associated with the air gap three-phase winding (10) without any slots in the iron is arranged in or on the azimuth module (4) (which can be rotated) of the pod propulsion system (1).

14. Marine propulsion system according to Claim 1 or 2, in which the cooling apparatus which is associated with the air gap three-phase winding (10) without any slots in the iron of the at least one electric motor (6), and/or of the at least one generator for the power supply, has at least one fan impeller (30, 31), which is arranged on a rotor axis (27) and by means of which a cooling gas flow, for example a cooling air flow (32), can be passed into the annular space (25) between the air gap three-phase winding (10) and the rotor (8) and/or into the annular space (26) between the air gap three-phase winding (10) and the laminated magnetic iron yoke (12) of the at least one electric motor (6) or generator.

15. Marine propulsion system according to Claim 14, in which one fan impeller (30, 31) is provided on each of the two end faces (28, 29), respectively, of the rotor (8).

16. Marine propulsion system according to Claim 14 or 15, in which the air gap three-phase winding (10) without any slots in the iron has cooling slots (24) which extend in its radial direction and by means of which heat losses which are produced in the air gap three-phase winding (10) can be dissipated to this cooling gas (32) flowing through it.

17. Marine propulsion system according to Claim 16, in which the radial cooling slots (24) in the air gap three-phase winding (10) without any slots in the iron are formed by Teflon filling bodies which can be inserted between the stator bars of the air gap three-phase winding (10) during its assembly, and can be removed after the encapsulation or impregnation process.

18. Marine propulsion system according to Claim 16 or 17, having a guide plate arrangement (33), through which the cooling gas flows (32) (which are produced by the two fan impellers (30, 31) are passed into the annular space (25) between the rotor (8) and the air gap three-phase winding (10), without any slots in the iron, in the direction of the axial central area of the at least one electric motor (6) and/or generator, with the cooling gas flows (32) being passed through the radial cooling slots (24) in the air gap three-phase winding (10) from the annular space (25) between the rotor (8) and the air gap three-phase winding (10) into the annular space (26) between the air gap three-phase winding (10) and the laminated magnetic iron yoke (12), and then back to the end faces (28, 29) of the rotor (8).

19. Marine propulsion system according to one of Claims 14 to 18, in which an inlet opening (34, 35), through which the fan impeller or impellers (30, 31) sucks or suck in cooling gas is formed in a housing (38) of the at least one electric motor (6) and/or generator, for each fan impeller (30, 31).

20. Marine propulsion system according to one of Claims 14 to 19, in which one or more outlet openings (39, 40) is or are formed in the housing (38) of the at least one electric motor (6) and/or generator, through which the cooling gas (32) is passed out of the housing (38) of the at least one electric motor (6) and/or generator after it has once again left the annular gap (11) between the rotor (8) and the iron yoke (12).

21. Marine propulsion system according to Claim 20, in which the inlet opening or the inlet openings (34, 35) and the outlet opening or the outlet openings (39, 40) is or are arranged on one or in each case on one of the two end faces (28, 29) of the rotor (8) in the housing (38) of the at least one electric motor (6) and/or generator.

22. Marine propulsion system according to one of Claims 14 to 21, in which the cooling gas flow (32) is carried in a circuit, and can be cooled down again by means of gas/water heat exchangers (43, 44).

23. Marine propulsion system according to one of Claims 14 to 18, in which at least one gas/water heat exchanger (43, 44) is in each case arranged within the housing (38) of the at least one electric motor (6) and/or generator, in one axial space or in both axial spaces (41, 42) between one end face or both end faces (28, 29) of the at least one electric motor (6) and/or generator and one end wall or both end walls (36, 37) of the housing (38), which gas/water heat exchanger (43, 44) is connected to a cooling circuit (45) in the vessel and past which the heated cooling gas flow (32) which emerges from the annular gap (11) between the rotor (8) and the iron yoke (12) is passed, before it is forced back into the annular gap (11) by the at least one fan impeller (30, 31).

24. Marine propulsion system according to one of Claims 14 to 22, in which the gas/water heat exchanger or exchangers is or are arranged outside the housing of the at least one electric motor (6) and/or generator.

## Revendications

1. Propulsion d'un navire comprenant au moins une hélice ( 7 ) de navire, au moins un moteur ( 6 ) électrique, au moyen duquel la au moins une hélice ( 7 ) de navire peut être entraînée, et une alimentation en courant alimentée par convertisseur, au moyen de laquelle le au moins un moteur ( 6 ) électrique peut être alimenté en énergie électrique et qui a au moins une machine d'entraînement et au moins une génératrice qui en est entraînée
dans laquelle le au moins un moteur ( 6 ) électrique et la au moins une génératrice sont constitués sous la forme de machines synchrones triphasées, le au moins moteur ( 6 ) électrique constitué sous la forme d'une machine synchrone triphasée et/ou la au moins une génératrice constituée sous la forme d'une machine synchrone triphasée de l'alimentation en courant ayant un rotor ( 8 ) et un enroulement statorique, qui sont disposés en se succédant l'un à l'autre dans une direction radiale du moteur ( 6 ) électrique ou de la génératrice, et dans laquelle l'enroulement statorique comporte un enroulement ( 10 ) triphasé à interstice, dont les conducteurs en faisceau sont en minces fils de cuivre isolés, qui est disposé dans un intervalle ( 11 ) annulaire entre le rotor ( 8 ) et une culasse ( 2 ) de fer qui est renforcée au moyen d'une structure en matière plastique et/ou qui est scellée ou imprégnée de résine et qui est raccordé à un dispositif ( 13 ) de refroidissement qui lui est associé et au moyen duquel la chaleur perdue qui s'y produit peut être évacuée, **caractérisée en ce que** l'enroulement ( 10 ) triphasé à interstice est constitué sans encoche de fer et la culasse ( 12 ) de fer est constituée sous la forme d'une culasse ( 12 ) de fer magnétique feuilletée et **en ce que** l'enroulement ( 10 ) triphasé à interstice sans encoche de fer du au moins un moteur ( 6 ) électrique et/ou de la au moins une génératrice de l'alimentation en courant est inséré dans une enceinte ( 14 ) annulaire en matière isolante, qui est entourée de la culasse ( 12 ) magnétique feuilletée, et **en ce que** le dispositif ( 13 ) de refroidissement associé à l'enroulement ( 10 ) triphasé à interstice sans encoche de fer a un circuit ( 15 ) pour du fluide de refroidissement, qui fait entrer du fluide ( 17 ) de refroidissement dans l'enceinte ( 14 ) annulaire sur un côté ( 16 ) frontal de cette enceinte ( 14 ) annulaire recevant l'enroulement ( 10 ) triphasé à interstice et on évacue de l'autre côté ( 18 ) frontal le fluide ( 17 ) de refroidissement passant entre le un côté ( 16 ) frontal et l'autre côté ( 18 ) frontal de l'enceinte ( 14 ) annulaire entre l'enroulement ( 10 ) triphasé à interstice et l'enceinte ( 14 ) annulaire et, le cas échéant, par d'autres canaux longitudinaux dans l'enroulement ( 10 ) triphasé à interstice.

2. Propulsion d'un navire suivant la revendication 1, dans laquelle le au moins un interstice électrique constitué sous la forme d'une machine synchrone triphasée et/ou la au moins une génératrice constituée sous la forme d'une machine synchrone triphasée de l'alimentation en courant a ou ont sur le rotor un enroulement d'excitation tournant en un fil de supraconducteur à haute température ( HTSL ) qui est disposé dans un cryostat ( 9 ) isolé par du vide et qui peut être refroidi très bas jusqu'à une température de 15 à 77 K.

3. Propulsion d'un navire suivant la revendication 1, dans lequel l'enceinte ( 14 ) annulaire comportant l'enroulement ( 10 ) triphasé à interstice sans encoche de fer est en matière plastique renforcée par de la fibre de verre.

4. Propulsion d'un navire suivant l'une des revendications 1 à 3, dans lequel il est prévu comme fluide ( 17 ) de refroidissement du dispositif ( 13 ) de refroidissement associé à l'enroulement ( 10 ) triphasé à interstice sans encoche de fer, un liquide de refroidissement isolant, par exemple de l'huile, du MIDEL ou analogue.

5. Propulsion d'un navire suivant l'une des revendications 1 à 4, dans laquelle un échangeur de chaleur ( 19 ) monté dans le circuit ( 15 ) de fluide de refroidissement du dispositif ( 13 ) de refroidissement associé à l'enroulement ( 10 ) triphasé à interstice sans encoche de fer peut être refroidi en retour au moyen du système ( 20 ) de refroidissement du navire.

6. Propulsion d'un navire suivant l'une des revendications 1 à 4, dans laquelle un échangeur de chaleur ( 19 ) monté dans le circuit ( 15 ) de fluide de refroidissement du dispositif ( 13 ) de refroidissemnt associé à l'enroulement ( 10 ) triphasé à interstice sans encoche de fer peut être refroidi en retour au moyen d'eau de mer.

7. Propulsion d'un navire suivant la revendication 5 ou 6, dans laquelle l'échangeur de chaleur ( 19 ) du circuit ( 15 ) de fluide de refroidissement du dispositif ( 13 ) de refroidissement associé à l'enroulement ( 10 ) triphasé à interstice sans encoche de fer est monté de manière fixe dans la coque ( 3 ) du navire.

8. Propulsion d'un navire suivant l'une des revendications 1 à 7, qui est constituée en propulsion ( 1 ) de nacelle et dont au moins un moteur ( 6 ) électrique est disposé dans un fuseau moteur ( 2 ) de la propulsion ( 1 ) de nacelle.

9. Propulsion d'un navire suivant l'une des revendications 1 à 8, dans lequel des conduits de refroidissement constituant le circuit ( 15 ) de fluide de refroidissement du dispositif ( 13 ) de refroidissement associé à l'enroulement ( 10 ) triphasé à interstice sans encoche de fer sont constituées de manière souple.

10. Propulsion d'un navire suivant la revendication 8 ou 9, dans laquelle la culasse ( 12 ) de fer magnétique feuilletée du au moins un moteur ( 6 ) électrique est serrée dans le carter ( 23 ) du fuseau moteur ( 2 ) de la propulsion ( 1 ) de nacelle.

11. Propulsion d'un navire suivant l'une des revendications 8 à 10, dans laquelle l'échangeur de chaleur ( 19 ) du circuit ( 15 ) de refroidissement du dispositif ( 13 ) de refroisissement associé à l'enroulement ( 10 ) triphasé à interstice sans encoche de fer est disposé dans un module ( 4 ) azimuthal tournant de la propulsion ( 1 ) de nacelle.

12. Propulsion d'un navire suivant l'une des revendications 8 à 10, dans laquelle l'échangeur ( 19 ) du circuit ( 15 ) de fluide de refroidissement du dispositif ( 13 ) de refroidissement associé à l'enroulement ( 10 ) triphasé à interstice sans encoche de fer est disposé dans un module ( 5 ) de l'entraînement ( 1 ) de nacelle, les tubes de l'échangeur de chaleur ( 19 ) étant en liaison thermique avec la paroi du module ( 5 ).

13. Propulsion d'un navire suivant l'une des revendications 8 à 12, dans laquelle une pompe ( 21 ) de recirculation montée dans le circuit ( 15 ) de refroidissement du dispositif ( 13 ) de refroidissement associé à l'enroulement ( 10 ) triphasé à interstice sans encoche de fer est montée dans ou sur le module ( 4 ) azimuthal de la propulsion ( 1 ) de nacelle.

14. Propulsion d'un navire suivant la revendication 1 ou 2, dans laquelle le dispositif de refroidissement associé à l'enroulement ( 10 ) triphasé à interstice sans encoche de fer du au moins un moteur ( 6 ) électrique et/ou de la au moins une génératrice de l'alimentation en courant, a au moins une roue ( 30, 31 ) de ventilateur qui est montée sur un axe ( 27 ) du rotor et au moyen de laquelle un courant ( 32 ) de gaz de refroidissement, par exemple un courant ( 32 ) d'air de refroidissement, peut être dirigé dans l'espace ( 25 ) annulaire intermédiaire entre l'enroulement ( 10 ) triphasé à interstice et le rotor ( 8 ) et/ou l'espace ( 26 ) annulaire intermédiaire entre l'enroulement ( 10 ) triphasé à interstice et la culasse ( 12 ) de fer magnétique feuilletée du au moins un moteur ( 6 ) électrique ou de la génératrice.

15. Propulsion d'un navire suivant la revendication 14, dans laquelle une roue ( 30, 31 ) de ventilateur est prévue sur les deux côtés ( 28, 29 ) frontaux du rotor ( 8 ).

16. Propulsion d'un navire suivant la revendication 14 ou 15, dans laquelle l'enroulement ( 10 ) triphasé à interstice sans encoche de fer est constitué en ayant des fentes ( 24 ) de refroidissement, qui s'étendent dans sa direction radiale et au moyen desquelles de la chaleur perdue produite dans l'enroulement ( 10 ) triphasé à interstice peut être évacuée sur ce gaz ( 32 ) de refroidissement passant sur cet enroulement.

17. Propulsion d'un navire suivant la revendication 16, dans laquelle les fentes ( 24 ) radiales de refroidissement de l'enroulement ( 10 ) triphasé à interstice sans encoche de fer sont formées par des pièces de remplissage en téflon qui, lors de l'assemblage de l'enroulement ( 10 ) triphasé à interstice, peuvent être insérées entre les barreaux du stator et être retirées après le scellement ou l'imprégnation.

18. Propulsion d'un navire suivant la revendication 16 ou 17, comprenant un dispositif ( 33 ) de tôle conductrice dans lequel les courants ( 32 ) de gaz de refroidissement produits par les deux roues ( 30, 31 ) de ventilateur sont dirigés dans l'espace ( 25 ) intermédiaire annulaire compris entre le rotor ( 8 ) et l'enroulement ( 10 ) triphasé à interstice sans encoche de fer dans la direction de la partie axiale médiane du au moins un moteur ( 6 ) électrique et/ou de la génératrice, les courants ( 32 ) de gaz de refroidissement passant dans les fentes ( 24 ) radiales de refroidissement de l'enroulement ( 10 ) triphasé à interstice à partir de l'espace ( 25 ) intermédiaire annulaire entre le rotor ( 8 ) et l'enroulement ( 10 ) triphasé à interstice pour aller dans l'espace ( 26 ) intermédiaire annulaire compris entre l'enroulement ( 10 ) triphasé à interstice et la tôle ( 12 ) de fer magnétique feuilletée et revenant ensuite aux côtés ( 28, 29 ) frontaux du rotor ( 8 ).

19. Propulsion d'un navire suivant l'une des revendications 14 à 18, dans laquelle il est constitué dans un carter ( 38 ) du au moins un moteur ( 6 ) électrique et/ou de la génératrice respectivement pour chaque roue ( 30, 31 ) de ventilateur une ouverture ( 34, 35 ) d'aspiration, par laquelle du gaz de refroidissement est aspiré dans la roue ou dans les roues ( 30, 31 ) de ventilateur.

20. Propulsion d'un navire suivant l'une des revendications 14 à 19, dans laquelle dans le carter ( 38 ) du au moins un moteur ( 6 ) électrique et/ou de la génératrice sont constituées une ou plusieurs ouvertures ( 39, 40 ) d'évacuation, par lesquelles le gaz ( 32 ) de refroidissement, après avoir requitté l'intervalle ( 11 ) annulaire entre le rotor ( 8 ) et la culasse ( 12 ) de fer, est évacué du carter ( 38 ) du au moins un moteur ( 6 ) électrique et/ou de la génératrice.

21. Propulsion d'un navire suivant la revendication 20, dans laquelle l'ouverture d'aspiration ou les ouvertures ( 34, 35 ) d'aspiration et l'ouverture d'évacuation ou les ouvertures ( 39, 40 ) d'évacuation sont disposées sur un ou respectivement sur l'un des deux côtés ( 28, 29 ) frontaux du rotor ( 8 ) dans le carter ( 38 ) du au moins un moteur ( 6 ) électrique et/ou de la génératrice.

22. Propulsion d'un navire suivant l'une des revendications 14 à 21, dans laquelle le courant ( 32 ) de gaz de refroidissement passe suivant un circuit et peut être refroidi en retour au moyen d'échangeurs de chaleur ( 43, 44 ) gaz-eau.

23. Propulsion d'un navire suivant l'une des revendications 14 à 18, dans laquelle à l'intérieur du carter ( 38 ) du au moins un moteur ( 6 ) électrique et/ou de la génératrice est disposée dans un espace intermédiaire axial ou dans les deux espaces ( 41, 42 ) intermédiaires axiaux entre un côté frontal ou les deux côtés ( 28, 29 ) frontaux du au moins un moteur ( 6 ) électrique et/ou de la génératrice et une paroi frontale ou les deux parois frontales ( 36, 37 ) du carter ( 38 ) respectivement au moins un échangeur de chaleur ( 43, 44 ) gaz-eau, qui est raccordé à un circuit ( 45 ) de refroidissement du navire et sur lequel passe le courant ( 32 ) de gaz de refroidissement réchauffé sortant d'intervalle ( 11 ) annulaire compris entre le rotor ( 8 ) et la culasse ( 12 ) de fer, avant d'être refoulé dans l'intervalle ( 11 ) annulaire par la au moins une roue ( 30, 31 ) de ventilateur.

24. Propulsion d'un navire suivant l'une des revendications 14 à 22, dans laquelle le ou les échangeurs de chaleur gaz-eau est/sont monté(s) à l'extérieur du carter du au moins un moteur ( 6 ) électrique et/ou de la génératrice.
